(19) Europäisches Patentamt
European Patent Office
Office européen des brevets

(11) Publication number: **0 331 217 A1**

# (12) EUROPEAN PATENT APPLICATION

(21) Application number: 89200177.7

(22) Date of filing: 27.01.89

(30) Priority: 02.02.88 NL 8800243

(43) Date of publication of application: 06.09.89 Bulletin 89/36

(84) Designated Contracting States: BE DE ES FR GB IT NL

(51) Int. Cl.⁴: C08F 218/00 , G02B 1/04

(71) Applicant: AKZO N.V.
Velperweg 76
NL-6824 BM Arnhem(NL)

(72) Inventor: Schutijser, Jan André
Beverodelan 32
NL-6952 JJ Dieren(NL)
Inventor: Magre, Eduard Pieter
Hyacintenlaan 9
NL-6866 DV Heelsum(NL)
Inventor: Jansen, Leonardus Gerardus Johannes
Zonegge 11-10
NL-6903 GA Zevenaar(NL)

(74) Representative: Sieders, René et al
AKZO N.V. Patent Department (Dept. CO)
P.O. Box 9300
NL-6800 SB Arnhem(NL)

## (54) Photochromic composition.

(57) Photochromic composition suitable for use in the manufacture of lenses. It comprises a photochromic compound which has been incorporated into a polymer obtained by polymerization of a polyol(allyl carbonate) of the formula: $R'-(O-CO-O-CH_2-RC = CH_2)n$, wherein n is an integer of from 2 to 5, R is hydrogen or $C_1$-$C_4$ alkyl and R′ is derived from a non-aromatic polyol containing n hydroxyl groups. To improve fatigue, life and colouring/decolouring speed, the polymer contains in addition 0,01-15% by weight of units derived from a copolymerizable compound containing an aromatic constituent, such as styrene, divinyl benzene, benzyl methacrylate or triallyl cyanurate.

EP 0 331 217 A1

## Photochromic composition

The invention relates to a photochromic composition of a photochromic compound in a polymer obtained by polymerization of a polyol(allylcarbonate) of the formula:

$$R'(O\overset{O}{\overset{\|}{C}}OCH_2\overset{R}{\overset{|}{C}} = CH_2)_n,$$ wherein

n is an integer in the range of 2 to 5, R stands for a hydrogen atom or an alkyl group having 1 to 4 carbon atoms, and R′ is derived from a nonaromatic polyol with n-hydroxyl groups, and also to shaped objects such as lenses and ski goggles manufactured wholly or partially therefrom. Photochromic compositions of said type are known among others from German Patent Application 3 607 759. In it is disclosed a particular process for incorporating a photochromic material into a plastics article. The photochromic material used preferably is a spiro(indoline), the emphasis in the case of the plastics material being on polymers of polyol-(allylcarbonate), more particularly diethylene glycol bis(allylcarbonate).

By the process of successively dispersing dissolved photochromic material homogeneously in a particular resin, manufacturing a film therefrom, depositing said film on the surface of the plastics article, and heating the article and film for some time to just below the melting point of the photochromic material, said material will be incorporated from the film into the surface of the plastics article.

It is stated that this manner of incorporating the photochromic compound into the plastics material results in considerably less decomposition than in the case of the method commonly used previously, where the photochromic compounds were heated to above their melting points.

A major drawback to the known photochromic compositions on a plastics basis as compared with photochromic inorganic glass compositions is that the former have a much shorter lifetime owing to fatigue. Though in actual practice such fatigue behaviour has been positively influenced by the use of UV stabilizers, such as derivatives of benzophenone and benzotriazole, there remains in actual practice a great need for photochromic plastics compositions of an even further improved fatigue behaviour.

The invention now provides photochromic compositions on a plastics basis which display a considerably more favourable fatigue behaviour than the known photochromic compositions.

The invention consists in that in a photochromic composition of the type mentioned in the opening paragraph there is also incorporated into the polymer 0,01-15% by weight of a copolymerizable compound with an aromatic group.

A major advantage of the photochromic compositions according to the invention is not only that the lifetime of such compositions is lengthened considerably, but also that a large number of compositions has a favourable effect on the photochromic rate of fading upon the removal of the activating source.

Since the aromatic comonomers form part of the polymer structure, they cannot exude, evaporate, or be lixiviated, as is the case, for instance, upon the addition of UV stabilizers. Because of the use of colourless aromatic comonomers there is no chance either of a less desired colour being introduced.

It should be noted that the incorporation of aromatic compounds into polymeric compositions based on polyol(allylcarbonate) is known in itself from, for instance, EP 0 114 080 and EP 0 201 978. These publications, however, do not relate to photochromic compositions, nor do they in any way teach the above-mentioned advantages of the photochromic compositions according to the invention.

According to the invention favourable results are generally obtained when the copolymerizable compound contains one or more vinyl groups or allyl groups.

Use may with advantage be made here of a compound with an aromatic group corresponding to the formula:

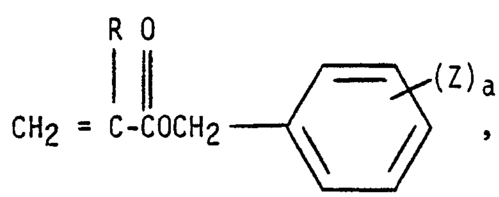
,

wherein

a represents an integer of 1 or 2,

R has the meaning of a hydrogen atom or an alkyl group having 1 to 4 carbon atoms, and Z stands for an H, Br, or Cl atom or for a methyl group, a methoxy group, a phenyl group, or a phenoxy group. It has been

found that very favourable results can be obtained with the last-mentioned group of compounds when using benzyl methacrylate.

Favourable results are also obtained when the copolymerizable compound is an aryl(meth)acrylate. Preference is then given to phenyl methacrylate. According to the invention a photochromic composition having satisfactory properties also may be obtained when the copolymerizable compound is triallyl cyanurate.

In addition, favourable properties are obtained when use is made of a copolymer in which the copolymerizable compound is the di(meth)acrylate or di(allylcarbonate) of a diol corresponding to the formula:

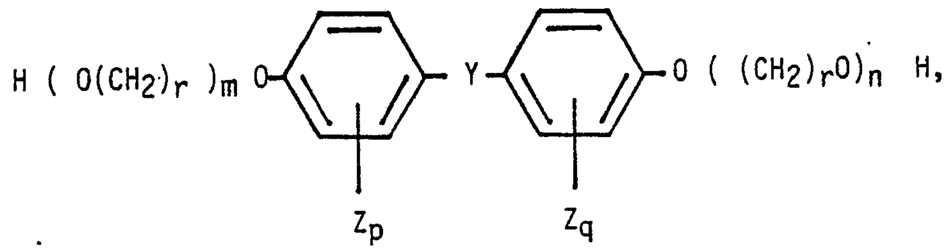

wherein Y has the meaning of an isopropylidene group, a methylene group, a sulphonyl group, or a thio group, r represents an integer in the range of 2 to 4, Z has the meaning of a hydrogen atom, a chlorine atom, or a bromine atom, and m, n, p and q represent integers, $m + n$ being $\leq 8$ and $p + q \leq 4$. According to the invention, however, preference is given to a photochromic composition in which the copolymerizable compound is a compound corresponding to the formula:

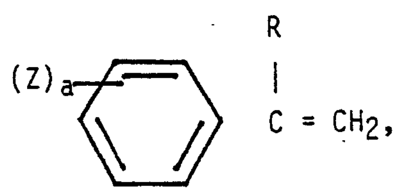

wherein a stands for an integer of 1 or 2, R has the meaning of a hydrogen atom or a methyl group and Z represents an H, Br, or Cl atom or a methyl group, a methoxy group, a phenyl group, or a phenoxy group. Optimum results have also been obtained with the copolymerizable compound being divinyl benzene.

The amount of copolymerizable compound to be incorporated depends to a large extent on the type of compound, as well as on the structure of the polyol(allylcarbonate) from which the polymer is formed. Preference will generally be given to a composition in which the copolymerizable compound is present in an amount of 0,1 to 10% by weight.

In choosing a particular copolymerizable compound and polyol(allylcarbonate) a man skilled in the art will have no difficulty in determining the corresponding optimum concentration of the former compound. Said compound - particularly when use is made of styrene and comonomers derived therefrom -will preferably be present in an amount of 0,3 to 1% by weight.

All photochromic compounds of which it is known that they may be incorporated into polymers of polyol(allylcarbonate) may be used for the preparation of photochromic compositions according to the invention.

As examples of suitable photochromic compounds may be mentioned the mercury dithizonates as described in US Patent Specification 4 043 637, the fulgides and fulgimides as described in GB Patent Specification 1 464 603, the adamantylidene or substituted adamantylidene compounds according to GB Patent Specification 2 146 327, highly condensed aromatic hydrocarbons as described in German Patent Specification 2 914 994 and in particular the large number of spiro-indoline compounds as described in German Patent Specification 2 347 018. Of particular importance among the last-mentioned class of compounds are the spiro(indoline) naphthoxazines described in US Patent Specifications 3 578 602 and 3 562 172 because of their exceptionally favourable fatigue behaviour. Finally, reference may be made to the photochromic compounds described in US Patent Specifications 4 215 010 and 4 342 668 and also to those in European Patent Applications 134 633, 146 135 and 186 364.

Because of their favourable fatigue behaviour preference is given according to the invention to the use

of spiro(indoline) naphthoxazines and spiro(indoline) pyridobenzoxazines. Examples of such compounds include 1,3,3-trimethyl spiro[indoline-2,3′(3H)-naphth(2,1-b) (1,4)oxazine]; 3,3-diethyl-1-methyl-spiro[indoline-9′-methoxy-2,3′-(3H)-napth(2,1-b) (1,4)oxazine]; 1,3,3,5,6-pentamethyl-9′-methoxyspiro[indoline-2,3′(3H)-napth(2,1-b) (1,4)- oxazine]; 1,3,5,6-tetramethyl-3-ethyl spiro[indoline-2,3′ (3H)-pyrido(3,2-f)(1,4)-benzoxazine]; and 1,3,3,4,5- or 1,3,3,5,6-pentamethyl spiro[indoline-2,3′ (3H)-pyrido(3,2-f) (1,4)benzoxazine].

According to the invention use is generally made of those polymers of polyol(allylcarbonate) which after copolymerization with a compound having an aromatic group and, optionally, up to 20% by weight (calculated on the polyol(allylcarbonate)) of an aliphatic monomer such as methyl methacrylate or vinyl acetate result in transparent products.

As examples of substituted allyl groups in the polyol(allylcarbonate) monomers which may be used according to the invention may be mentioned 2-methallyl, 2-ethyl allyl, 2-isopropyl allyl, 2-n-propyl allyl, and 2-n-butyl allyl. However, preference is usually given to an unsubstituted allyl group. In the above-mentioned formula for the polyol(allylcarbonate) R′ represents a group derived from a non-aromatic polyol having 2-5 hydroxyl groups. Preference is then generally given to a polyol having 2 hydroxyl groups. The aliphatic polyol may be linear or branched and generally contains 2-10 carbon atoms. For the aliphatic polyol is usually employed an alkylene glycol having 2-4 carbon atoms or a polyalkylene oxide glycol of which the alkylene oxide groups have 2-4 carbon atoms. Examples of suitable glycols include: ethylene glycol, propylene glycol, trimethylene glycol, tetramethylene glycol, diethylene glycol, and triethylene glycol. As examples of polyol(allylcarbonate) monomers which are especially suited to be used according to the invention may be mentioned:

ethylene glycol bis(allylcarbonate),
diethylene glycol bis(2-methallylcarbonate),
diethylene glycol bis(allylcarbonate),
triethylene glycol bis(allylcarbonate),
propylene glycol bis(2-ethyl allylcarbonate),
1,3-propanediol bis(allylcarbonate),
1,3-butanediol bis(allylcarbonate),
dipropylene glycol bis(allylcarbonate),
trimethylene glycol bis(2-ethyl allylcarbonate), and
pentamethylene glycol bis(allylcarbonate).

Particularly when use is made of diethylene glycol bis(allylcarbonate), which is marketed by Akzo Chemie under the trademark Nouryset®200, it is possible to obtain optimum results in the preparation of photochromic compositions.

Because of the process used in preparing the polyol(allylcarbonate) monomer, such as phosgenation of the polyol (or allyl alcohol) and subsequent esterification with allyl alcohol (or polyol), such a monomer will usually also contain one or more compounds of the following formula:

$$CH_2 = \overset{\overset{\displaystyle R}{|}}{C} - CH_2O - \overset{\overset{\displaystyle O}{\|}}{C} - [O - R_b - O - \overset{\overset{\displaystyle O}{\|}}{C} - ]_q\ OCH_2 - \overset{\overset{\displaystyle R}{|}}{C} = CH_2,$$

wherein R has the aforesaid meaning, Rb represents a divalent group, such as an alkylene group derived from a diol, and g stands for an integer in the range of 2 to 5. Thus, diethylene glycol bis(allylcarbonate) will also contain one or more compounds of the structure

$$CH_2 = CH - CH_2 - O\overset{\overset{\displaystyle O}{\|}}{C} \{OCH_2CH_2 - O - CH_2CH_2O\overset{\overset{\displaystyle O}{\|}}{C}\}_q\ OCH_2 - CH = CH_2$$

in an amount of 2-20% by weight.

Preparation of the photochromic compositions according to the present invention is usually as follows. First, a copolymer is prepared in a manner analogous to that described for the polymerization of diethylene glycol bis(allylcarbonate), after which the photochromic compound is deposited on the surface of the polymer and the whole is heated to a temperature at which the compound is incorporated into the polymer. In order to prevent the photochromic material from decomposing during the melt, it may be deposited on the polymer from a solvent or while homogeneously dispersed in a resin. When use is made of photochromic materials which readily decompose on being heated to above their melting point, heating to just below the melting point of the photochromic material will effect its being incorporated yet into the

polymer. Alternatively, if the photochromic material is sufficiently stable and its presence does not interfere with the action of the initiator, said material may be incorporated into the mixture to be polymerized prior to polymerization.

The preparation of the copolymer is generally carried out in the presence of a radical initiator. In this process the reaction may be initiated by heating the reaction mixture or by radiating it with ultraviolet light or subjecting it to ionizing radiation.

As examples of radical initiators that may optionally be used for preparing the copolymers according to the invention may be mentioned benzoyl peroxide, p-chlorobenzoyl peroxide, 2,4-dichlorobenzoyl peroxide, decanoyl peroxide, lauroyl peroxide, and acetyl peroxide; percarbonates, such as diisopropyl peroxydicarbonate, di-sec. butyl peroxydicarbonate, and di-2-ethylhexyl peroxydicarbonate; alkyl peresters, such as t-butyl peroxy-2-ethylhexanate and t-butyl peroxypivalate; and azo compounds such as azobisisobutyronitrile. The amount of initiator is dependent on the type of polymerization, the polymerization conditions, the monomers used, etc. The amount which need be used will generally be 0,05-10% by weight, preferably 0,1-8% by weight of the total weight of the monomers.

It is preferred that the polymerization reaction should be carried out in a mould. The quality of the optical copolymers according to the invention is to a great extent determined by the polymerization temperature. This temperature is dependent on the types of monomers used, as well as on their relative weight ratio and the type of initiator. Generally, it is preferred that the polymerization reaction should be initiated at a comparatively low temperature, the temperature be increased gradually, and the product be cured at elevated temperature toward the end of the polymerization reaction. As a rule, conditions will be so chosen that the polymerization will be complete within 2 to 40 hours.

Optionally, the polymerization reaction may be carried out in the presence of releasing agents, UV stabilizers, antioxidants, Ni-complex stabilizers, dyes, etc.

The cured polymer according to the invention generally is colourless transparent with a light transmission of at least 80%.

Optionally, before as well as after the introduction of one or more photochromic compounds the shaped objects manufactured wholly or partially from the photochromic compositions, such as lenses for sunglasses and ski goggles, may be coloured in a known manner by, for instance, immersion in a suitable dye bath.

For shaped objects other than the aforementioned ones that may also be manufactured wholly or partially from the photochromic compositions according to the invention, reference is made to an article by A.E.J. Wilson in Phys. Technol. 15 (1984), pp. 232-238.

The invention will be further described in, but not limited by the following examples.

In the examples use was made of test plates which were of the homopolymers and copolymers of diethylene glycol bis(allylcarbonate) and had been made as follows.

Firstly, a plano lens mould was made comprising a pair of flat glass plates of 15 x 15 cm with in between them a 4 mm-thick gasket of plasticized PVC. Following filtration and deaeration there was introduced into this mould the crystal clear and slightly viscous mixture of 3,2 parts by weight of diisopropyl peroxydicarbonate and 96,8 parts by weight of diethylene glycol bis(allylcarbonate) and optionally aromatic comonomer. As soon as the mould had been fastened between four clamps, it was transferred to a forced circulation air oven and the polymerization was carried out using the following successive residence times:

16 hours at 45°C
1 hour at 63°C
40 minutes at 78°C and
20 minutes at 100°C.

After each run there were released from the mould 4 mm-thick transparent plates of great hardness.

The photochromic compounds were incorporated into these test plates in the following manner.

Firstly, a lacquer solution is prepared composed of 1,49 g of cellulose propionate, 0,26 g of diiso-octyl adipate, 0,75 g of photochromic compound, and 22,5 g of dichloromethane. Upon having been cleaned, one side of the test plate is coated with the lacquer solution (0,15 g/$cm^2$). After three hours the solvent will virtually be evaporated and a thin lacquer film will have formed on the plate. After the plate and lacquer film have been heated to 150°C for 30 minutes and then cooled, the film is peeled off the plate. After the photochromic compound had been applied, the plates were sawn into 2 x 4 cm pieces to serve as test specimens.

To determine the fatigue use was made of a Xenotest 150 of the Original Hanau model. The test specimens were attached to the panels with their photochromic side facing the lamp. Around the lamp there were positioned six infrared filters and a UV window, so that a spectrum was obtained virtually correlating to that of sunlight and an illuminance to the sample of 200 klux. The temperature during ageing varied from 42° to 45°C at a relative humidity of 60%. After the ageing test the test specimens were stored in the dark

for at least 48 hours prior to the transmission being measured.

To determine the magnitude of the photochromic effect and the fading rate use was made of a type 6253 150W Xenon lamp having a spectrum correlating to that of sunlight and an illuminance of 50 000 lux directed to the sample at an angle of incidence of 60°. The measuring beam is directed perpendicular to the sample via an infrared absorbing filter and a surface mirror. To prevent the measuring beam from introducing a change in transmission as a result of photochromy, an attenuation filter and a colour filter which keeps away the UV light up to and including 500 nm were installed. The sample of which the transmissions have to be determined is in a cell containing water kept at a constant temperature (23°C). First, the transmission of the test specimens in unexposed condition is measured (=To), whereupon it is again determined after an exposure period of about 15 minutes, in the course of which the transmission has attained a virtually constant level (=Tb). After the test specimen has been screened off for 1 minute, the transmission is determined once more (=$T_1$). The change in optical density as a result of radiation by the activating source (=ΔOD) is calculated from $\Delta OD = \log \frac{To}{Tb}$, wherein ΔOD is a measure of the number of active phototropic molecules in the test specimen.

By plotting the ΔOD values obtained during an ageing test against the ageing time, it may be determined how long it takes for the number of active phototropic molecules to be reduced by half (=$D\frac{1}{2}$).

The photochromic fading rate S is obtained by relating the OD change taking place in the first minute after activation has ceased (=$\Delta OD_1$) to the ΔOD which has taken place during the previous 15-minute activation, so that

$$S = \frac{\Delta OD_1}{\Delta OD} \quad , \text{wherein } \Delta OD_1 = \log \frac{T1}{Tb} \quad \text{and } \Delta OD = \log \frac{To}{Tb}$$

Finally, the Shore D hardness of the test sheets was determined in accordance with ASTM D1484.

## Example I

In the above-indicated manner several test plates were prepared on the basis of diethylene glycol bis-(allylcarbonate) copolymerized or not with styrene as comonomer used in the amounts given in the table below. The photochromic compound used was 1,3,3-trimethyl spiro[indoline-2,3′(3H)-naphth(2,1-b) (1,4)-oxazine].

Said compound was incorporated into the polymer by the method indicated before. Next, the plates were sawn into pieces and aged as described hereinbefore.

The results of the hardness measurements, the calculated halving time $D\frac{1}{2}$ upon ageing, and the photochromic fading rate S are given in the table below.

Table 1

| Styrene % by weight | Shore D hardness | $D\frac{1}{2}$ (hours) | photochromic fading rate S |
|---|---|---|---|
| 0 | 84 | 65 | 0,71 |
| 0,1 | 84½ | 66 | 0,73 |
| 0,3 | 82½ | 77 | 0,74 |
| 0,5 | 82 | 88½ | 0,78 |
| 0,7 | 81 | 99 | 0,80 |
| 1,0 | 77 | 115½ | 0,86 |

The test results given in the table above clearly show a significant improvement of the photochromic fading rate S already at 0,1% by weight of styrene, while at 0,3% by weight of styrene there is a considerable improvement in the fatigue.

## Example II

In a manner analogous to that in Example I a plate was manufactured of diethylene glycol bis-(allylcarbonate), except that in this case 0,5% by weight of a technical quality of divinyl benzene, consisting of 50% by weight of divinyl benzene and 50% by weight of ethyl vinyl benzene, was incorporated into the mixture to be polymerized. Use was made of the same photochromic compound as given in Example I. The results of the hardness measurements, the ageing tests, and the determination of the photochromic fading rate S are given in the table below.

Table 2

| Divinyl benzene % by weight | Shore D hardness | $D_{\frac{1}{2}}$ (hours) | photochromic fading rate S |
|---|---|---|---|
| 0 | 84 | 65 | 0,71 |
| 0,5 | $81\frac{1}{2}$ | $104\frac{1}{2}$ | 0,79 |
| 0,1 | 84 | $93\frac{1}{2}$ | 0,71 |
| 0,03 | 84 | 93 | 0,69 |
| 0,01 | 84 | 70 | 0,69 |

The table above clearly demonstrates the favourable effect of the addition of 0,5% by weight of notably divinyl benzene on both the fatigue behaviour and the photochromic fading rate S.

Example III

In a manner analogous to that given in Example I three plates were made of diethylene glycol bis-(allylcarbonate), copolymerized or not with benzyl methacrylate as comonomer. The photochromic compound and the manner of application were the same as described in Example I. The results of the hardness measurements, the ageing tests, and the determination of the photochromic fading rate S are given in the table below.

Table 3

| benzyl methacrylate % by weight | Shore D hardness | $D_{\frac{1}{2}}$ (hours) | photochromic fading rate S |
|---|---|---|---|
| 0 | 84 | 65 | 0,71 |
| 0,5 | 85 | 64 | 0,69 |
| 10 | 84 | 101 | 0,68 |

The results given in the table above clearly show that there is a considerable improvement in fatigue behaviour following copolymerization with 10% by weight of benzyl methacrylate. The hardness does not undergo any further change, while the photochromic fading rate S is reduced somewhat.

Example IV

In a manner analogous to that in Example I two test plates were manufactured incorporating 0,5% by weight of styrene or not. For the photochromic compound use was made then of 3,3-diethyl-1-methyl-spiro-[indoline-9′-methoxy-2,3′(3H)-naphth(2,1-b)(1,4)oxazine]. The results of the ageing tests are given in the table below.

Table 4

| Styrene % by weight | Shore D hardness | $D_{\frac{1}{2}}$ (hours) | photochromic fading rate S |
|---|---|---|---|
| 0 | 84 | 32 | 0,41 |
| 0,5 | 82 | 68 | 0,49 |

The results given in the table above clearly show the favourable effect of the incorporation of 0,5% by weight of styrene as comonomer on both the fatigue behaviour and the photochromic fading rate.

Example V

In a manner analogous to that in Example I two test plates were manufactured incorporating 5% by weight of diallyl phthalate or not. The photochromic compound was the same as described in Example IV.

Table 5

| diallyl phthalate % by weight | Shore D hardness | $D_{\frac{1}{2}}$ (hours) | photochromic fading rate S |
|---|---|---|---|
| 0 | 84 | 32 | 0,41 |
| 5 | 83,5 | 48 | 0,40 |

The above table clearly demonstrates the favourable effect of 5% by weight of diallyl phthalate as comonomer on the fatigue behaviour.

Example VI

In a manner analogous to that in Example I two test plates were manufactured incorporating 0,5% by weight of para-methyl styrene or not. The photochromic compound was the same as described in Example I.

Table 6

| p-methyl styrene % by weight | Shore D hardness | $D_{\frac{1}{2}}$ (hours) | photochromic fading rate S |
|---|---|---|---|
| 0 | 84 | 65 | 0,71 |
| 0,5 | 80,5 | 132 | 0,80 |

The above table clearly demonstrates the favourable effect of the incorporation of 0,5% by weight of para-methyl styrene on both the fatigue behaviour and the photochromic fading rate S.

## Claims

1. A photochromic composition of a photochromic compound in a polymer obtained by polymerization of a polyol(allylcarbonate) of the formula

$R'(O\overset{O}{\overset{\|}{C}}OCH_2\overset{R}{\overset{|}{C}}=CH_2)_n$, wherein

n is an integer in the range of 2 to 5, R stands for a hydrogen atom or an alkyl group having 1 to 4 carbon

atoms, and R′ is derived from a nonaromatic polyol with n hydroxyl groups, characterized in that there is also incorporated into the polymer 0,01-15% by weight of a copolymerizable compound with an aromatic group.

2. A photochromic composition according to claim 1, characterized in that the copolymerizable compound contains one or more vinyl groups or allyl groups.

3. A photochromic composition according to claim 1, characterized in that the copolymerizable compound with an aromatic group corresponds to the formula

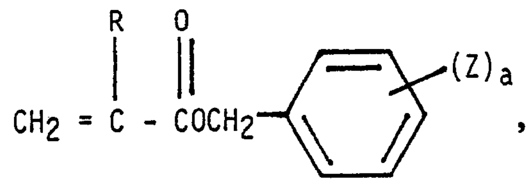

wherein
a represents an integer of 1 or 2,
R has the meaning of a hydrogen atom or an alkyl group having 1 to 4 carbon atoms, and Z stands for an H, Br, or Cl atom or for a methyl group, a methoxy group, a phenyl group, or a phenoxy group.

4. A photochromic composition according to claim 3, characterized in that the copolymerizable compound is benzyl methacrylate.

5. A photochromic composition according to claim 1, characterized in that the copolymerizable compound is an aryl(meth)acrylate.

6. A photochromic composition according to claim 1, characterized in that the copolymerizable compound is triallyl cyanurate.

7. A photochromic composition according to claim 1, characterized in that the copolymerizable compound is the di(meth)acrylate or di(allylcarbonate) of a diol corresponding to the formula:

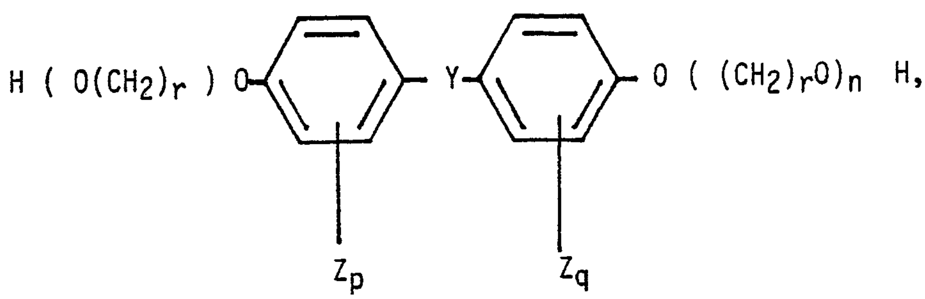

wherein Y has the meaning of an isopropylidene group, a methylene group, a sulphonyl group, or a thio group, r represents an integer in the range of 2 to 4, Z has the meaning of a hydrogen atom, a chlorine atom, or a bromine atom, and m, n, p and q represent integers, m + n being ≦ 8 and p + q ≦ 4.

8. A photochromic composition according to claim 1, characterized in that the copolymerizable compound is a compound corresponding to the formula:

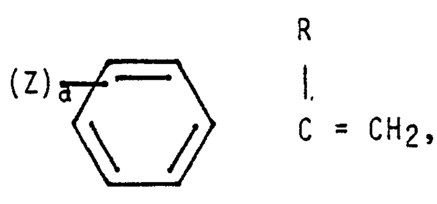

wherein a stands for an integer of 1 or 2, R has the meaning of a hydrogen atom or a methyl group and Z represents an H, Br or Cl atom or a methyl group, a methoxy group, a phenyl group, or a phenoxy group.

9. A photochromic composition according to claim 1, characterized in that the copolymerizable compound is divinyl benzene.

10. A photochromic composition according to claim 1, characterized in that the copolymerizable compound is present in an amount of 0,1 to 10% by weight.

11. A photochromic composition according to claim 1, characterized in that the copolymerizable compound is present in an amount of 0,3-1% by weight.

12. Shaped objects such as lenses and ski goggles manufactured wholly or partially from a photochromic composition according to one or more of the preceding claims.

European Patent Office

# EUROPEAN SEARCH REPORT

Application Number

EP 89 20 0177

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 100, no. 24, June 1984, page 43, abstract no. 192932h, Columbus, Ohio, US; & JP-A-58 217 511 (OLYMPUS OPTICAL CO., LTD) 17-12-1983<br>* Abstract * | 1,2,8 | C 08 F 218/00<br>G 02 B 1/04 |
| X | EP-A-0 114 080 (ENICHEM)<br>* Claims 1,7 * | 1,2,5 | |
| X | EP-A-0 201 978 (ENICHEM)<br>* Claim 1 * | 1,2,6 | |
| A | US-A-4 373 076 (HOYA LENS)<br>* Claim 1 * | 1,2,4 | |
| D,A | DE-A-3 607 759 (P.P.G.)<br>* Whole document * | | |

TECHNICAL FIELDS SEARCHED (Int. Cl.4)

C 08 F
G 02 B
B 29 D

The present search report has been drawn up for all claims

| Place of search | Date of completion of the search | Examiner |
|---|---|---|
| THE HAGUE | 12-06-1989 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)